# EUROPEAN PATENT SPECIFICATION

(11) **EP 2 927 708 B1**
(45) Date of publication and mention of the grant of the patent: **03.04.2019**
(21) Application number: 14174728.7
(22) Date of filing: 27.06.2014
(51) Int. Cl.: G01S 13/00, G01S 13/72, G01S 13/91, G01S 13/87

(54) **Target detection apparatus and target detection method**
Zielerkennungsvorrichtung und Zielerkennungsverfahren
Appareil et procédé de détection de cible

(30) Priority: 12.03.2014 JP 2014049396
(43) Date of publication of application: 07.10.2015
(73) Proprietor: Kabushiki Kaisha Toshiba, Tokyo 105-8001 (JP)
(72) Inventor: Ino, Masami, Minato-ku, Tokyo 105-8001 (JP)
(74) Representative: Moreland, David

(56) References cited:
- JP-A- 2011 247 596
- US-A- 4 641 146
- US-A1- 2002 014 985
- US-A1- 2011 128 181
- MALANOWSKI M ET AL: "Two Methods for Target Localization in Multistatic Passive Radar", IEEE TRANSACTIONS ON AEROSPACE AND ELECTRONIC SYSTEMS, IEEE SERVICE CENTER, PISCATAWAY, NJ, US, vol. 48, no. 1, 1 January 2012 (2012-01-01), pages 572-580, XP011433835, ISSN: 0018-9251, DOI: 10.1109/TAES.2012.6129656

## Description

### FIELD

Embodiments described herein relate generally to a target detection apparatus and a target detection method applicable to, for example, a multistatic primary surveillance radar system (MSPSR system).

### BACKGROUND

An existing primary surveillance radar transmits a pulse-modulated radio wave from a directional antenna, and receives an echo reflected by a target (for example, aircraft) by the directional antenna. The azimuth angle of the target is measured based on the azimuth angle of the directional antenna. The distance (slant range) from the antenna to the target is measured from the round trip time of the radio wave. A primary surveillance radar having a function of this type is also called a monostatic radar. The monostatic radar shares a single antenna for transmitting and receiving of radar waves.

In general, an echo pulse from the target appears between a time corresponding to range zero and a time corresponding to the slant range in synchronism with the transmitting timing of a pulsed radio wave transmitted from the antenna. The monostatic radar detects the target by calculating the range correlation of echoes between adjacent sweeps using the sliding window method. A sweep means a radio wave transmission period that is repeated every predetermined time.

A bistatic radar is known as well. The bistatic radar transmits a radar wave from a rotating antenna or the like, and receives a reflected echo from a target by a beam antenna installed in a place apart from the antenna. The target is picked up based on the azimuth of the transmitting antenna, the azimuth of the receiving antenna, the transmitting timing of the radar wave, the receiving timing of the echo, and the like.

An MSPSR (MultiStatic Primary Surveillance Radar) includes a transmitting antenna configured to irradiate a target with a radio wave, and a receiving antenna configured to receive a reflected radio wave (echo) from the target. The transmitting antenna and the receiving antenna of the MSPSR are arranged in different places. In addition, the receiving antennas and receivers are arranged at a plurality of points. The MSPSR acquires the position of the target by hyperbolic positioning or elliptical positioning.

The MSPSR is a primary surveillance radar based on a new concept, and has no rotating antenna for rotating a beam. The MSPSR transmits a radio wave from an omnidirectional antenna. The radio wave transmitted by the MSPSR are received in a plurality of places different from the transmitting antenna. Hence, the MSPSR cannot obtain the azimuth information of the transmitting antenna, unlike the monostatic radar and the bistatic radar. For this reason, a target detection method unique to the MSPSR is demanded.

US2011128181 discloses a system for locating non-cooperating objects by means of a random or pseudo-random noisy type waveform generator, an amplifier, of said waveforms and an antenna which radiates them towards the object, which object generates an electromagnetic echo which is detected by a passive subsystem of antennas and receivers. The time delay and Doppler shift values are determined in the latter subsystem and in turn forwarded from encoding and modulating blocks to a central processor which estimates the position and the speed of the object. The passive subsystem receives, through a transmission channel or storage element, the reference signal which represents the transmitted noisy type waveform and uses it for calculating the bi-dimensional cross correlation (ambiguity function), which permits to estimate the time delay and the Doppler shift.

JP2011247596 discloses a radar apparatus that includes a transmitting unit for radiating a radio wave; a plurality of receiving units which are located at different observation points and each receives reflected radio waves resulting from reflection of the radio wave radiated from the transmitting unit at the plurality of targets and each has a time/Doppler-frequency sensor for observing a reception time and a Doppler frequency about each target and an angle-measuring sensor for observing an azimuth of each target.

### BRIEF DESCRIPTION OF THE DRAWINGS

FIG. 1 is a view showing an example of an MSPSR system including a target detection apparatus according to an embodiment;
FIG. 2 is a functional block diagram showing an example of the system shown in FIG. 1;
FIG. 3 is a view showing target positions obtained in correspondence with receiver devices;
FIG. 4 is a view showing target positions obtained in a plurality of cycles;
FIG. 5 is a view schematically showing contents of correlation processing;
FIG. 6 is a flowchart showing an example of the processing procedure of a correlation processor 302; and
FIG. 7 is a functional block diagram showing an example of a system according to another embodiment.

### DETAILED DESCRIPTION

A target detection apparatus is applicable to a multistatic radar system is defined in Claim 1 and a method relating thereto is defined in Claim 3. The radar system includes a transmitter device which transmits a radio wave from a transmitting antenna and a plurality of time-synchronizing receiver devices each of which receives, by a receiving antenna, an echo from a target based on a radio wave transmitted from a transmitting antenna of a transmitter device. Each receiver device includes the receiving antenna, a receiver and a video detector. The target detection apparatus includes a plurality of tracking processors and a correlation processor. The tracking processors obtain a plurality of tracks by individually tracking a plurality of video data output from the receiver devices, respectively. The video detector adds information that represents the transmitting time and adds time stamp information that represents the echo receiving time to the data. The correlation processor extracts, by using a difference between a bistatic range and the distance to the transmitting antenna viewed from each receiver device, a combination of echo signals signals for which a plurality of ellipses have a common intersection from the same target based on a correlation relationship between a position of the transmitting antenna, positions of the receiving antennas of the plurality of receiver devices, and the plurality of tracks obtained by each of the tracking processor.

Various embodiments will be described hereinafter with reference to the accompanying drawings.

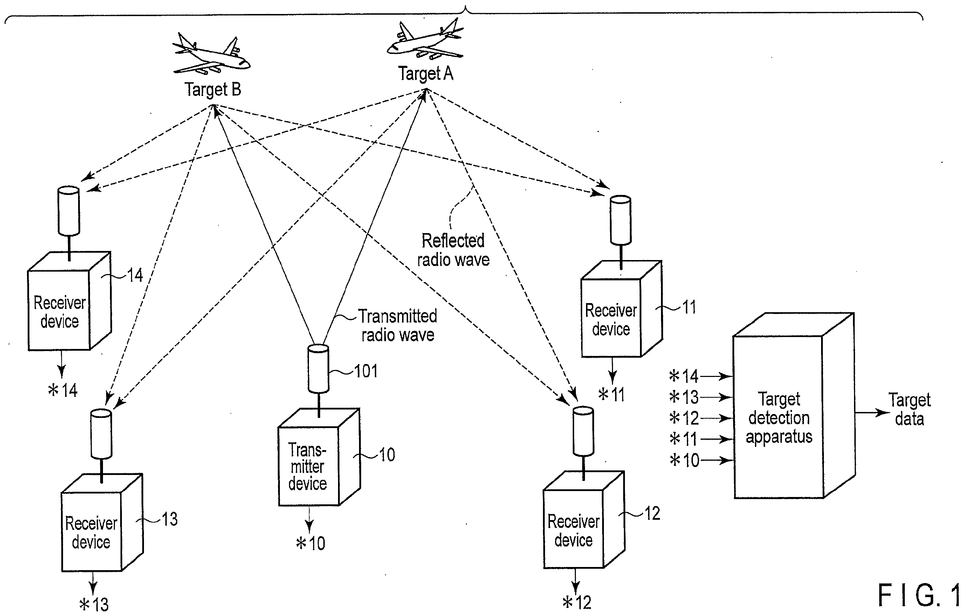

FIG. 1 is a view showing an example of an MSPSR system including a target detection apparatus according to an embodiment. MSPSR systems are roughly classified into active types and passive types. An active type MSPSR system includes a radio wave irradiation source of its own. This embodiment assumes an active type MSPSR system. In a passive type MSPSR system, receiver devices arranged at a plurality of points receive echoes from a target based on radio waves transmitted from the radio wave source (for example, broadcasting station) of another system. The position of the target is obtained by, for example, hyperbolic positioning.

As shown in FIG. 1, the MSPSR system according to this embodiment includes one transmitter device 10, four receiver devices 11 to 14, and a target detection apparatus 30. The target detection apparatus 30 is provided in, for example, a central processing unit. The transmitter device 10 and the receiver devices 11 to 14 are connected to the target detection apparatus 30 via, for example, a ground-based communication network.

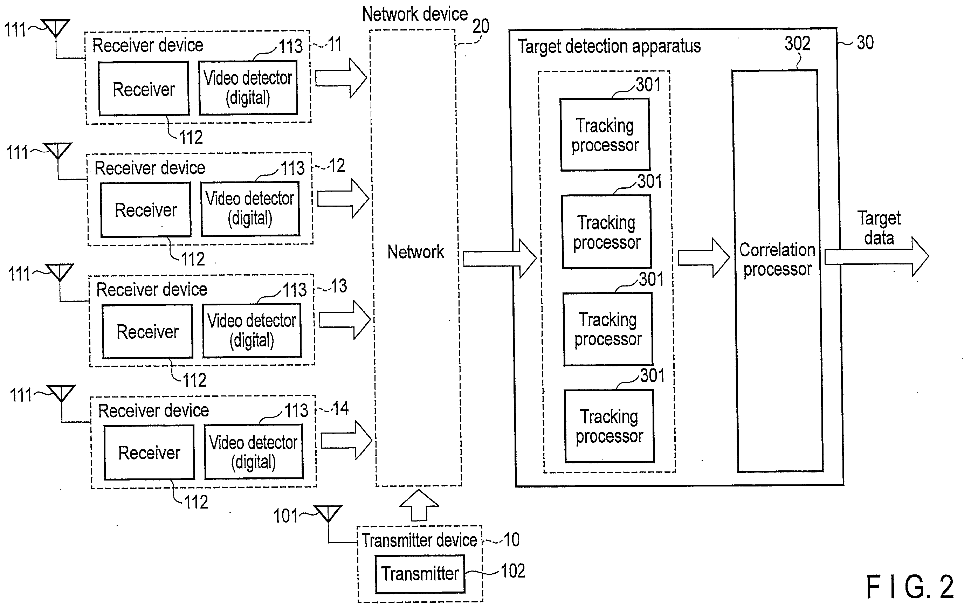

FIG. 2 is a functional block diagram showing an example of the system shown in FIG. 1. The transmitter device 10 includes a transmitting antenna 101 such as an omnidirectional antenna, and a transmitter 102. The transmitter 102 transmits a radio wave from the transmitting antenna 101 at a predetermined transmitting timing. The radio wave is reflected by targets A and B and returns as a reflected radio wave (echo). The receiver devices 11 to 14 receive the echo from the target A and the echo from the target B.

Each of the receiver devices 11 to 14 includes a receiving antenna 111, a receiver 112, and a video detector 113. The receiver 112 receives the echo trapped by the receiving antenna 111, performs detection, and outputs a baseband signal. The video detector 113 performs processing such as anti-clutter and noise removal for the baseband signal from the receiver 112, and outputs digital data based on the echo from the target. This digital data (corresponding to video data) is transmitted to the target detection apparatus 30 via a network device 20.

The video detector 113 adds information representing the radio wave transmitting time and information (time stamp) representing the echo receiving time to the digital data. The time stamp is, for example, time information based on the common time in the MSPSR system. Times in the transmitter device 10 and those in the receiver devices 11 to 14 are accurately synchronized by a time synchronization function (not shown). The pieces of information such as radio wave transmitting timings and echo receiving timings are shared by the plurality of apparatuses in the MSPSR system.

The target detection apparatus 30 includes a plurality of tracking processors 301 provided in correspondence with the receiver devices 11 to 14, respectively, and a correlation processor 302. The tracking processors 301 individually track video data output from the receiver devices 11 to 14. That is, the tracking processors 301 individually track the plurality of echo signals output from the receiver devices 11 to 14. A plurality of target positions are thus obtained in correspondence with the receiver devices 11 to 14.

The correlation processor 302 extracts a combination of echo signals from the same target based on the correlation relationship between the position of the transmitting antenna 101 of the transmitter device 10, the positions of the receiving antennas 111 of the receiver devices 11 to 14, and the plurality of target positions obtained by the plurality of tracking processors 301. The plurality of targets are thus individually detected.

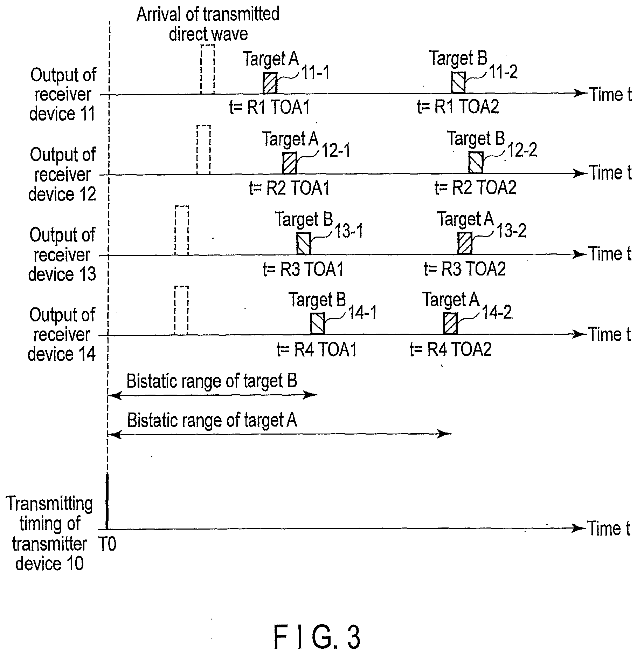

FIG. 3 is a view showing target positions obtained in correspondence with receiver devices. When the echo signals output from the receiver devices 11 to 14 are arranged on the time base using the radio wave transmitting timing as a reference, echo signals from the same target are uniquely determined by the relative positional relationship (correlation relationship) between the position of the transmitting antenna 101, the position of each receiving antennas 111, and the target position (for example, aircraft A) .

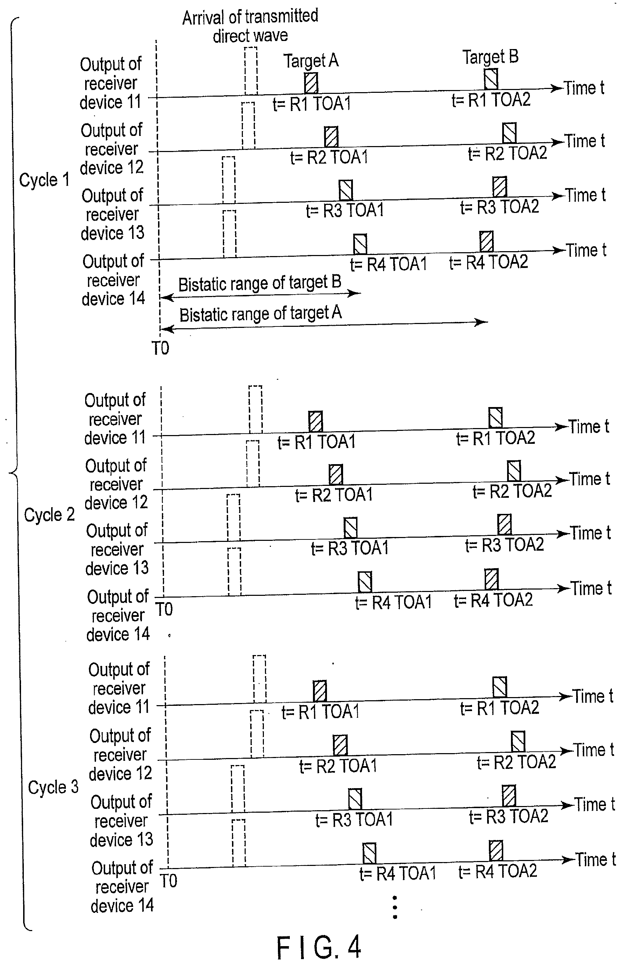

FIG. 4 is a view showing target positions obtained in a plurality of cycles. A cycle means a series of sequences in which a radio wave is transmitted from the transmitting antenna 101, and echoes then return to the receiving antennas 111 of the receiver devices 11 to 14 and undergo reception processing. The processing range of the target detection apparatus 30 can change from the minimum to the maximum in one cycle. When the first cycle ends, the second cycle starts. When the second cycle ends, the third cycle starts.

As shown in FIG. 4, target positions detected from the outputs of the receiver devices 11 to 14 in cycle 1, target positions detected in cycle 2, and target positions detected in cycle 3 have a correlation for the same target. Hence, a combination of tracks of echo signals from one target can be extracted as echoes from the same target.

The correlation processor 302 extracts echo signals from the same position as a combination. At this time, the correlation processor 302 detects the motions of tracks when the echo signals from the calculated target position are received by the receiver devices 11 to 14. The correlation processor 302 also selects a combination of tracks that can be estimated as reflected by the same target from a number of observed tracks. This makes it possible to obtain the three-dimensional position of the target.

Note that a track is information representing how an echo signal corresponding to a target has moved through, for example, a position detected n cycles before, a position detected (n-1) cycles before,..., a position detected one cycle before and obtained by comparing a target detection time (representing a position) in the (n-1)th cycle and that in the nth cycle.

When a time Td between temporally consecutive cycles is known, the moving speed of the echo signal on the time base can be obtained by dividing a change amount · t of the echo signal on the time base by Td. That is, a track is a data set having a position (position on the time base) and speed information. Since the track has speed information, the target position in the next cycle can be predicted.

To extract the tracks of the echo signals output from the receiver devices 11 to 14, a difference (difference d) between a bistatic range and the distance to the transmitting antenna 101 viewed from each receiver device is used. That is, a receiver device having the smallest difference d is closest to the target. On the other hand, a receiver device having the largest difference d is farthest from the target. A receiver device (receiver device 11 in this embodiment) closest to the target out of the receiver devices 11 to 14 and a track corresponding to an echo signal corresponding to the target are extracted.

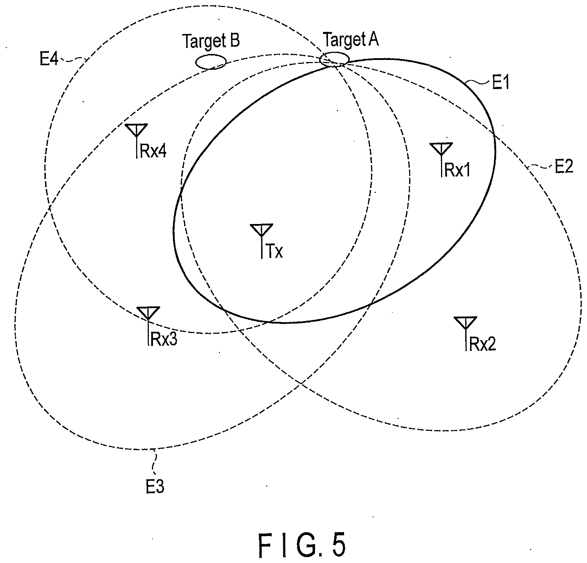

FIG. 5 is a view schematically showing contents of correlation processing. Assume an ellipse (E1 in FIG. 5) on which the current target position of the extracted track is located, as shown in FIG. 5. The position (Tx) of the transmitting antenna 101 of the transmitter device 10 is defined as one focal point of the ellipse, and the position (Rx1) of the receiving antenna 111 of the receiver device is defined as the other focal point of the ellipse.

Similarly, ellipses (for example, E2, E3, and E4 in FIG. 5) having the position (Tx in FIG. 5) of the transmitting antenna and the positions (Rx2, Rx3, and Rx4) of the receiving antennas of the remaining three receiver devices as focal points are assumed for all tracks of echo signals obtained from the receiver devices. FIG. 5 does not illustrate ellipses concerning the target B to avoid complexity.

As shown in FIG. 5, a set of tracks of echo signals for which the plurality of ellipses have a common intersection is extracted, thereby extracting a set of echo signals from the same target.

When one set of echo signal tracks is extracted, the same processing is performed for the remaining echo signals. This makes it possible to detect one target from the plurality of echo signals received and detected by the plurality of receiver devices of the MSPSR.

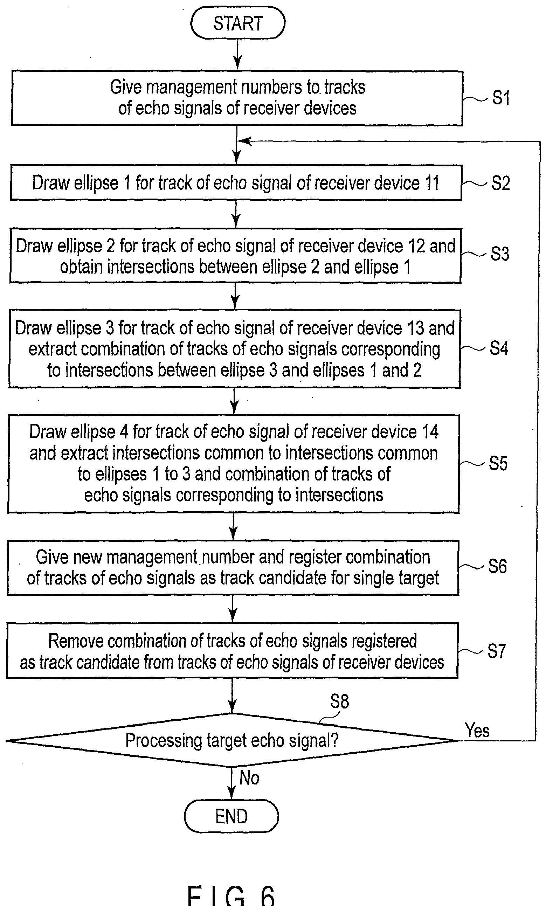

FIG. 6 is a flowchart showing an example of the processing procedure of the correlation processor 302.

### [Step S1]

Management numbers for identification are given to the tracks of echo signals output from the receiver devices 11 to 14. For example, a combination of the identification information of a receiver device and the identification information of an echo signal can be used as a management number. Tracks each including a plurality of echo signals are given sequential numbers in ascending (or descending) order of bistatic range. For example, as shown in FIG. 3, identification numbers 11-1, 11-2, 11-3,.... are given.

### [Step S2]

One echo signal track of the receiver device 11, which has the minimum (or maximum) bistatic range, is selected. Using the antenna position of the transmitter device 10, the antenna position of the receiver device 11, and the bistatic range of the selected echo signal track, an ellipse having the receiving antenna 111 and the transmitting antenna 101 as focal points is drawn.

### [Step S3]

Using the bistatic range of each of the tracks of echo signals of the receiver device 12, an ellipse 2 having the antenna position of the transmitter device 10 and the antenna position of the receiver device 12 as focal points is drawn. Intersections between the ellipse 2 and the ellipse 1 drawn in step S2 are obtained in correspondence with the tracks of the echo signals.

### [Step S4]

Using the bistatic range of each of the tracks of echo signals of the receiver device 13, an ellipse 3 having the antenna position of the transmitter device 10 and the antenna position of the receiver device 13 as focal points is drawn. Intersections between the ellipse 1 drawn in step S2, and the ellipse 2 drawn in step S3 are calculated. Based on the result, intersections common to the three ellipses 1, 2, and 3 and a combination of tracks of echo signals corresponding to the intersections are extracted.

### [Step S5]

Using the bistatic range of each of the tracks of echo signals of the receiver device 14, an ellipse 4 having the antenna position of the transmitter device 10 and the antenna position of the receiver device 14 as focal points is drawn. Intersections common to the intersections common to the ellipses 1, 2, and 3 extracted in step S4 and a combination of tracks of echo signals corresponding to the intersections are extracted.

### [Step S6]

Another new management number is given to the one combination of tracks of echo signals obtained in accordance with the procedure up to step S5. This combination is registered as a track candidate for a single target.

### [Step S7]

The combination of tracks of echo signals registered in step S6 is removed from the tracks of echo signals of the receiver devices 11 to 14.

### [Step S8]

If a processing target echo signal remains, the processing procedure returns to step S2. If no processing target echo signal track remains, the processing procedure ends.

As described above, according to this embodiment, in the active type MSPSR system, even when a plurality of targets exists, echoes from the same target can correctly be discriminated. This makes it possible to accurately detect the target. It is therefore possible to provide a target detection apparatus and a target detection method in an MSPSR system, which can correctly discriminate echoes from the same target and thus accurately detect the target.

Note that in this embodiment, an example concerning an active type MSPSR has been described. The technical concept according to this embodiment is also applicable for a passive type MSPSR. For example, a system formed by replacing the transmitter device 10 shown in FIG. 1 with one of receiver devices can be understood as a passive type MSPSR system. In such a system, a hyperbolic curve having the antenna of the replaced receiver device and the antenna of another receiver device as focal points is drawn. This makes it possible to extract a combination of tracks of echo signals in accordance with the same processing procedure as described above.

### (Other Embodiments)

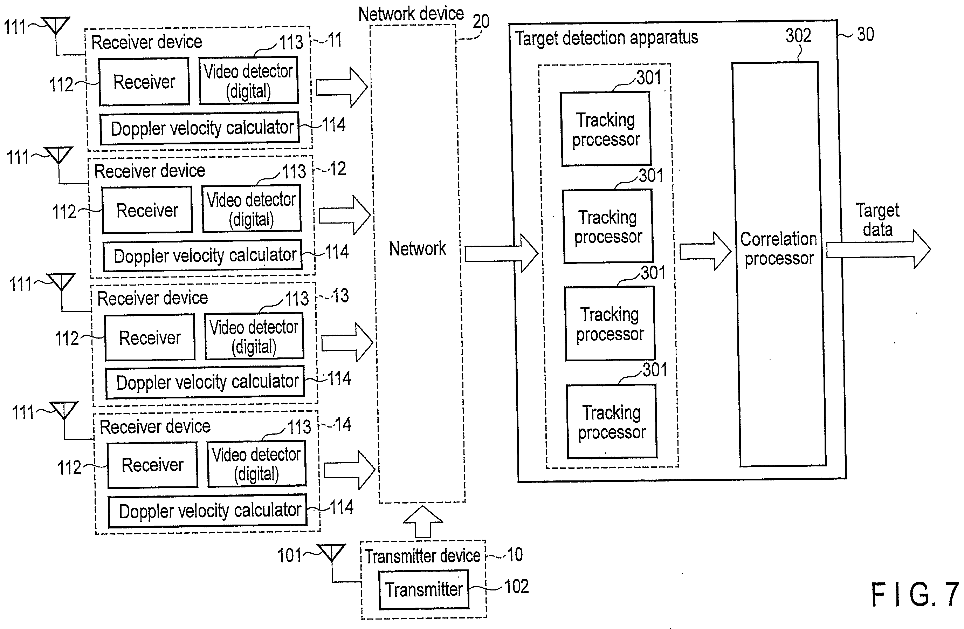

FIG. 7 is a functional block diagram showing an example of a system according to another embodiment. In the system shown in FIG. 7, each of receiver devices 11 to 14 includes a Doppler velocity calculator 114. The Doppler velocity calculator 114 calculates the Doppler velocity of a target corresponding to each echo signal based on the difference between the receiving frequency of echo signals received by the receiver devices 11 to 14 and the transmitting frequency of a radio wave transmitted from a transmitter device 10.

Each of the receiver devices 11 to 14 outputs digital data (corresponding to video data) corresponding to the echo signal of the target and the Doppler velocity of the target. A target detection apparatus 30 receives the digital data corresponding to the echo signal of the target and the Doppler velocity of the target via a network device 20.

Use of the Doppler velocity allows the system to remove an unnecessary signal at the preceding stage of tracking processing. This can reduce the processing load of, for example, a tracking processor 301. The tracking processor 301 outputs a plurality of target positions (tracks) obtained and the Doppler velocity of the target to a correlation processor 302.

The correlation processor 302 extracts a combination of echo signals from the same target based on the correlation relationship between the position of a transmitting antenna 101 of the transmitter device 10, the positions of receiving antennas 111 of the receiver devices 11 to 14, and the plurality of target positions (tracks) obtained by the plurality of tracking processors 301. A plurality of targets are thus individually detected. It is therefore possible to further improve target detection performance.

According to the other embodiment, the correlation processor 302 obtains the correlation between the Doppler velocity information of each echo signal and the processing result of the tracking processor 301 based on the echo signals from the plurality of targets received at the positions of the receiving antennas 111 of the receiver devices 11 to 14 and the Doppler velocity information corresponding to the echo signals. The adequacy of each track selected in a combination as the track of an echo signal from the same target can be examined using the result.

This examination can prevent a wrong track from being mixed in the combination of tracks of echo signals from the same target. Hence, according to the other embodiment, it is possible to more accurately detect a target.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the claims. The accompanying claims and their equivalents are intended to cover such forms or modifications as would fall within the scope of the claims.

## Claims

1. An apparatus configured to detect a target of a multistatic radar system comprising a transmitter device (10) which transmits a radio wave from a transmitting antenna (101) and a plurality of time-synchronizing receiver devices (11 to 14) each of which receives, by a receiving antenna (111), an echo from a target based on the radio wave transmitted from a transmitting antenna (101), the apparatus comprising:
a plurality of tracking processors (301) configured to obtain a plurality of target positions by individually tracking a plurality of video data output from the plurality of receiver devices (11 to 14),
**characterized in that**, each receiver device (11 to 14) includes the receiving antenna (111), a receiver (112) and a video detector (113), the video detector (113) adds information that represents the transmitting time and adds time stamp information that represents the echo receiving time to the video data; and the apparatus further comprising:
a correlation processor (302) configured to extract, by using a difference (d) between a bistatic range and the distance to the transmitting antenna (101) viewed from each receiver device (11 to 14), a combination of tracks of echo signals for which a plurality of ellipses have a common intersection from the same target based on a correlation relationship between a position of the transmitting antenna (101), positions of the receiving antennas (111) of the plurality of receiver devices, and the plurality of target positions obtained by each of the tracking processors.

2. The target detection apparatus according to claim 1, **characterized in that** the plurality of receiver devices (11 to 14) further includes a Doppler velocity calculator (114) which outputs Doppler velocities of a plurality of targets, respectively, the correlation processor (302) extracts the combination of the tracks of the echo signals from the same target based on the correlation relationship between the position of the transmitting antenna (101), the positions of the receiving antennas (111) of the plurality of receiver devices (11 to 14), the plurality of target positions, and the Doppler velocities of the plurality of targets, and examines the adequacy of each track selected in a combination as the track of an echo signal from the same target using the result of the correlation relationship.

3. A method configured to detect a target of a multistatic radar system comprising a transmitter device (10) which transmits a radio wave from a transmitting antenna (101) and a plurality of time-synchronizing receiver devices (11 to 14) each of which receives, by a receiving antenna (111), an echo from a target based on a radio wave transmitted from the transmitting antenna (101), the method comprising:
obtaining a plurality of target positions by individually tracking a plurality of video data output from the plurality of receiver devices (11 to 14) respectively,
**characterized in that**, where each receiver device (11 to 14) includes the receiving antenna (111), a receiver (112) and the video detector (113); and the method further comprises:
including, from the video detector (113), information representing the radio waves transmitting time and timestamp information representing the echo receiving time; and
extracting tracks of the echo signals output from the receiver devices (11 to 14) by using a difference (d) between a bistatic range and the distance to the transmitting antenna (101) viewed from each receiver device (11 to 14), and extracting a combination of echo signals for which a plurality of ellipses have a common intersection from the same target based on a correlation relationship between a position of the transmitting antenna (101), positions of the receiving antennas (111) of the plurality of receiver devices (11 to 14), and the plurality of target positions obtained by the tracking.

4. The target detection method according to claim 3, **characterized in that** the plurality of receiver devices (11 to 14) further includes a Doppler velocity calculator (114) which outputs Doppler velocities of a plurality of targets, respectively, in the extracting, the combination of the tracks of the echo signals from the same target is extracted based on the correlation relationship between the position of the transmitting antenna (101), the positions of the receiving antennas (111) of the plurality of receiver devices (11 to 14), the plurality of target positions, and the Doppler velocities of the plurality of targets, and examining the adequacy of each track selected in a combination as the track of an echo signal from the same target using the result of the correlation relationship.

## Patentansprüche

1. Vorrichtung, welche konfiguriert ist, um ein Ziel eines multistatischen Radarsystems zu erkennen, welches eine Sendevorrichtung (10), welche eine Funkwelle aus einer Sendeantenne (101) sendet, und eine Mehrzahl von zeitsynchronisierenden Empfängervorrichtungen (11 bis 14) umfasst, welche jeweils durch eine Empfängerantenne (111) ein Echo von einem Ziel basierend auf der Funkwelle empfangen, welche von einer Sendeantenne (101) gesendet wird, wobei die Vorrichtung umfasst:
eine Mehrzahl von Verfolgungsprozessoren (301), welche konfiguriert sind, um eine Mehrzahl von Zielpositionen durch individuelles Verfolgen einer Mehrzahl von Videodaten zu erhalten, welche von der Mehrzahl von Empfängervorrichtungen (11 bis 14) ausgegeben werden,
**dadurch gekennzeichnet, dass** jede Empfängervorrichtung (11 bis 14) die Empfängerantenne (111), einen Empfänger (112) und einen Videodetektor (113) umfasst, wobei der Videodetektor (113) Informationen hinzufügt, welche die Sendezeit darstellen und Zeitstempelinformationen hinzufügt, welche die Echoempfangszeit der Videodaten darstellt; und wobei die Vorrichtung ferner umfasst:
einen Korrelationsprozessor (302), welcher konfiguriert ist, um, durch Verwenden eines Unterschieds (d) zwischen einem bistatischen Feld und dem Abstand von der Sendeantenne (101), von jeder Empfängervorrichtung (11 bis 14) gesehen, eine Kombination von Spuren von Echosignalen zu extrahieren, für welche eine Mehrzahl von Ellipsen einen gemeinsamen Schnittpunkt vom selben Ziel aufweisen, basierend auf einer Korrelationsbeziehung zwischen einer Position der Sendeantenne (101), Positionen der Empfängerantennen (111) der Mehrzahl von Empfängervorrichtungen und der Mehrzahl von Zielpositionen, welche von jedem der Verfolgungsprozessoren erhalten werden.

2. Zielerkennungsvorrichtung nach Anspruch 1, **dadurch gekennzeichnet, dass** die Mehrzahl von Empfängervorrichtungen (11 bis 14) ferner einen Dopplergeschwindigkeitsrechner (114) umfasst, welcher jeweils Dopplergeschwindigkeiten einer Mehrzahl von Zielen ausgibt, der Korrelationsprozessor (302) die Kombination der Spuren des Echosignals aus dem selben Ziel extrahiert, basierend auf der Korrelationsbeziehung zwischen der Position der Sendeantenne (101), den Positionen der Empfängerantennen (111), der Mehrzahl von Empfängervorrichtungen (11 bis 14), der Mehrzahl von Zielpositionen, und der Dopplergeschwindigkeiten der Mehrzahl von Zielen, und die Angemessenheit jeder Spur analysiert, die in einer Kombination ausgewählt wird, als die Spur eines Echosignals vom selben Ziel durch Verwenden des Ergebnisses der Korrelationsbeziehung.

3. Verfahren, welches konfiguriert ist, um ein Ziel eines multistatischen Radarsystems zu erkennen, welches eine Sendevorrichtung (10), welche eine Funkwelle aus einer Sendeantenne (101) sendet, und eine Mehrzahl von zeitsynchronisierenden Empfängervorrichtungen (11 bis 14) umfasst, welche jeweils durch eine Empfängerantenne (111) ein Echo von einem Ziel basierend auf der Funkwelle empfangen, welche von der Sendeantenne (101) gesendet wird, wobei das Verfahren umfasst:
Erhalten einer Mehrzahl von Zielpositionen durch individuelles Verfolgen einer Mehrzahl von Videodaten, welche von der Mehrzahl von Empfängervorrichtungen (11 bis 14) jeweils ausgegeben werden,
**dadurch gekennzeichnet, dass** jede Empfängervorrichtung (11 bis 14) die Empfängerantenne (111), einen Empfänger (112) und den Videodetektor (113) umfasst; und wobei das Verfahren ferner umfasst:
Einschließen, vom Videodetektor (113), von Informationen, welche die Funkwellensendezeit darstellen und Zeitstempelinformationen, welche die Echoempfangszeit darstellen; und
Extrahieren von Spuren des Echosignals, welche von den Empfängervorrichtungen (11 bis 14) ausgegeben werden, durch Verwenden eines Unterschieds (d) zwischen einem bistatischen Feld und dem Abstand von der Sendeantenne (101), von jeder Empfängervorrichtung (11 bis 14) gesehen, und Extrahieren einer Kombination von Echosignalen, für welche eine Mehrzahl von Ellipsen einen gemeinsamen Schnittpunkt aufweisen, vom selben Ziel, basierend auf einer Korrelationsbeziehung zwischen einer Position der Sendeantenne (101), Positionen der Empfängerantennen (111) der Mehrzahl von Empfängervorrichtungen (11 bis 14) und der Mehrzahl der durch Verfolgen erhaltenen Zielpositionen.

4. Zielerkennungsverfahren nach Anspruch 3, **dadurch gekennzeichnet, dass** die Mehrzahl von Empfängervorrichtungen (11 bis 14) ferner einen Dopplergeschwindigkeitsrechner (114) umfasst, welcher Dopplergeschwindigkeiten einer Mehrzahl von Zielen ausgibt, wobei, jeweils beim Extrahieren, die Kombination der Spuren des Echosignals vom selben Ziel basierend auf die Korrelationsbeziehung zwischen der Position der Sendeantenne (101), den Positionen der Empfängerantennen (111) der Mehrzahl von Empfängervorrichtungen (11 bis 14), der Mehrzahl von Zielpositionen, und der Dopplergeschwindigkeiten der Mehrzahl von Zielen, extrahiert wird und Analysieren der Angemessenheit jeder Spur, die in einer Kombination ausgewählt wird, als die Spur eines Echosignals vom selben Ziel durch Verwenden des Ergebnisses der Korrelationsbeziehung.

## Revendications

1. Appareil configuré pour détecter une cible d'un système de radar multistatique qui comprend un dispositif d'émetteur (10) qui émet une onde radio depuis une antenne d'émission (101) et une pluralité de dispositifs de récepteur en synchronisation temporelle (11 à 14) dont chacun reçoit, au moyen d'une antenne de réception (111), un écho en provenance d'une cible sur la base de l'onde radio qui est émise depuis une antenne d'émission (101), l'appareil comprenant :
une pluralité de processeurs de poursuite (301) qui sont configurés de manière à ce qu'ils obtiennent une pluralité de positions cible en poursuivant individuellement une pluralité de données vidéo qui sont émises en sortie depuis la pluralité de dispositifs de récepteur (11 à 14) ;
**caractérisé en ce que** chaque dispositif de récepteur (11 à 14) inclut l'antenne de réception (111), un récepteur (112) et un détecteur de vidéo (113), le détecteur de vidéo (113) ajoute une information qui représente l'instant d'émission et ajoute une information d'estampille temporelle qui représente l'instant de réception d'écho des données vidéo ; et l'appareil comprenant en outre :
un processeur de corrélation (302) qui est configuré de manière à ce qu'il extraie, en utilisant une différence (d) entre une portée bistatique et la distance jusqu'à l'antenne d'émission (101) qui est vue depuis chaque dispositif de récepteur (11 à 14), une combinaison de poursuites de signaux d'écho pour lesquels les ellipses d'une pluralité d'ellipses comportent une intersection commune par rapport à la même cible sur la base d'une relation de corrélation entre une position de l'antenne d'émission (101), des positions des antennes de réception (111) de la pluralité de dispositifs de récepteur, et la pluralité de positions cible qui sont obtenues au moyen de chacun des processeurs de poursuite.

2. Appareil de détection de cible selon la revendication 1, **caractérisé en ce que** la pluralité de dispositifs de récepteur (11 à 14) inclut en outre un calculateur de vitesse Doppler (114) qui émet respectivement en sortie des vitesses Doppler d'une pluralité de cibles, **en ce que** le processeur de corrélation (302) extrait la combinaison des poursuites des signaux d'écho en provenance de la même cible sur la base de la relation de corrélation entre la position de l'antenne d'émission (101), les positions des antennes de réception (111) de la pluralité de dispositifs de récepteur (11 à 14), la pluralité de positions cible, et les vitesses Doppler de la pluralité de cibles, et **en ce qu'**il examine la pertinence de chaque poursuite sélectionnée dans une combinaison en tant que poursuite d'un signal d'écho en provenance de la même cible en utilisant le résultat de la relation de corrélation.

3. Procédé configuré pour détecter une cible d'un système de radar multistatique qui comprend un dispositif d'émetteur (10) qui émet une onde radio depuis une antenne d'émission (101) et une pluralité de dispositifs de récepteur en synchronisation temporelle (11 à 14) dont chacun reçoit, au moyen d'une antenne de réception (111), un écho en provenance d'une cible sur la base d'une onde radio qui est émise depuis l'antenne d'émission (101), le procédé comprenant :
l'obtention d'une pluralité de positions cible en poursuivant individuellement une pluralité de données vidéo qui sont respectivement émises en sortie depuis la pluralité de dispositifs de récepteur (11 à 14) ;
**caractérisé en ce que** chaque dispositif de récepteur (11 à 14) inclut l'antenne de réception (111), un récepteur (112) et le détecteur de vidéo (113), et le procédé comprend en outre :
l'inclusion, en provenance du détecteur de vidéo (113), d'une information qui représente l'instant d'émission d'ondes radio et d'une information d'estampille temporelle qui représente l'instant de réception d'écho ; et
l'extraction de poursuites des signaux d'écho qui sont émis en sortie depuis les dispositifs de récepteur (11 à 14) en utilisant une différence (d) entre une portée bistatique et la distance jusqu'à l'antenne d'émission (101) qui est vue depuis chaque dispositif de récepteur (11 à 14), et l'extraction d'une combinaison de signaux d'écho pour lesquels les ellipses d'une pluralité d'ellipses comportent une intersection commune par rapport à la même cible sur la base d'une relation de corrélation entre une position de l'antenne d'émission (101), des positions des antennes de réception (111) de la pluralité de dispositifs de récepteur (11 à 14), et la pluralité de positions cible qui sont obtenues au moyen de la poursuite.

4. Procédé de détection de cible selon la revendication 3, **caractérisé en ce que** la pluralité de dispositifs de récepteur (11 à 14) inclut en outre un calculateur de vitesse Doppler (114) qui émet respectivement en sortie des vitesses Doppler d'une pluralité de cibles, et **caractérisé par**, lors de l'extraction, le fait que la combinaison des poursuites des signaux d'écho en provenance de la même cible est extraite sur la base de la relation de corrélation entre la position de l'antenne d'émission (101), les positions des antennes de réception (111) de la pluralité de dispositifs de récepteur (11 à 14), la pluralité de positions cible, et les vitesses Doppler de la pluralité de cibles, et par l'examen de la pertinence de chaque poursuite sélectionnée dans une combinaison en tant que poursuite d'un signal d'écho en provenance de la même cible en utilisant le résultat de la relation de corrélation.
